# EUROPEAN PATENT SPECIFICATION

(11) **EP 3 793 810 B1**
(45) Date of publication and mention of the grant of the patent: **07.06.2023**
(21) Application number: 19723814.0
(22) Date of filing: 17.05.2019
(51) Int. Cl.: B29C 37/00, B29C 67/24, B29K 67/00

(54) **METHOD FOR THE PRODUCTION OF WALL CLADDING AND SIDING ELEMENTS**
VERFAHREN ZUR HERSTELLUNG VON WANDVERKLEIDUNGEN UND VERKLEIDUNGSELEMENTEN
PROCÉDÉ DE PRODUCTION DE REVÊTEMENTS MURAUX ET D'ÉLÉMENTS DE PAREMENT

(30) Priority: 18.05.2018 EP 18173102
(43) Date of publication of application: 24.03.2021
(73) Proprietor: Polysto, 9160 Lokeren (BE)
(72) Inventor: MOREELS, Alexandre, 2640 Mortsel (BE)
(74) Representative: Gevers Patents
(86) International application number: PCT/EP2019/062782
(87) International publication number: WO 2019/219900

(56) References cited:
- WO-A1-2014/114989
- DE-A1- 3 145 334
- US-A- 3 078 249
- US-A- 4 346 050

## Description

### FIELD OF THE INVENTION

The present invention relates to an improved method for the production of elements intended for the cladding of surfaces in the building industry. More particularly, the invention relates to the production of protection elements, such as plinths and bumpers/fenders which are suitable for use in hygienically sensitive areas, such as in the food industry, in the pharmaceutical industry, in hospitals, or in clean rooms, such as, for example, also in the electronics industry.

### BACKGROUND OF THE INVENTION

It is known to apply protection elements such as plinths and bumpers/fenders in the places where walls and floors merge into one another. These elements may mechanically protect the bottom part of the walls, and indirectly the walls above them, against knocks and bumps by trolleys, carts, forklifts, pallet trucks, pump trucks or pallet trucks, also known as trans pallet trucks, or also by mobile equipment or furniture, such as serving trolleys or hospital beds. Especially the corners of passages are very vulnerable, and in those locations such protection is therefore very important.

The more traditional plinths, usually made of wood, plastic or light metal, cannot be used in many environments because they are not providing sufficient sturdiness and/or wear resistance, easily deform, do not comply with the hygiene requirements associated with the function of the building in which they are used, or do not show the appropriate aesthetic look.

Firmer shock plinths may be made of concrete, but this material is relatively brittle and crumbles easily, usually has a certain porosity and is not water repellent, whereby these shock plinths are also from a hygienic point of view undesirable.

For this reason, such concrete bumpers/fenders are often provided with a metal coating on the outside, at least partially, but preferably over the entire visible surface. Stainless steel is often used in this context, because it confers a more hygienic and aesthetic view and also maintains this for a long time period. To improve the adhesion of the steel outer layer to the concrete, the metal coating may for a better anchoring be shaped so that it grips around the concrete core and/or an edge thereof may be incorporated into the concrete core. German Patent Specification DE 4340953 C1 describes such an embodiment, wherein a filling part consisting of polystyrene foam is used to decrease the weight of the product. To improve the adhesion of the steel outer layer to the concrete, the metal layer may also be glued. Such plinths are amongst others described in Belgian Patent Specification BE 1017613 A6. This additional metal coating is, however, cumbersome to apply.

DE 2619058 A1 describes a similar embodiment with a core of polyurethane (PU) foam. This foam may be given an appropriate firmness and elasticity to support the outer metal layer, to protect it against deformation upon impact, and even to provide it with a certain cushioning and flexibility.

This additional metal coating represents in all described applications a significant additional cost in terms of materials and requires additional steps in the manufacturing process.

In addition, the lap joints of the plinths, i.e. the sides where two consecutive plinths approach each other, still remain in most of these models uncovered, so that they are still pretty roughly and imprecisely finished. When installing the bumpers/fenders, this leads to wider joints, which is undesirable because dirt more readily settles in those locations and because they require more material for being filled.

Plinths on the basis of less brittle materials than concrete have also been developed. The core of such plinths may use plastics as a binding agent, preferably supplemented with one or more filling materials. The binding agents are preferably polymeric resins which cure by cross-linking, so that they form a solid three-dimensional molecular structure. In this way they offer a good adhesion to the filling materials, and a solid structure. Preferably, these resins are also water-repellent, so that the plinths may also comply with some of the hygienic requirements.

EP 848120 A1 discloses a solid plinth formed from a composite material consisting of silicon particles coated with a polyester binder, to which a dye may be added. A disadvantage of this embodiment is that a smooth outer surface is difficult to achieve because of the particles in the mass. If a high gloss, good colouring, and/or other additional properties are to be given to the plinths by additives, then high amounts of these additives are necessary to achieve the desired result in this embodiment. The properties of the core and of the surface may also not be influenced independently of each other.

At the outer sides which are intended for remaining visible, these plinths, therefore, may be further provided with an upper layer. This layer may also consist of plastic, because of good chemical and water repellent properties, and which may be given a certain decorative effect by means of a pigment. In order to increase the wear resistance of the plinths, a very strong cross-linking polymeric resin is preferably also used for the top layer, so that ultimately a surface with high hardness is obtained.

NL 1006957 describes a bumper/fender which is produced by first laying a prefabricated fibre-reinforced synthetic resin profile in a pre-formed mould, or by making therein a top layer of a fibre reinforced coating. This top layer is made of a food-safe coating consisting of polyester resin mixed and filled up with fibres and/or glass fleece, produced to meet a particular impact strength. After the production of the top layer, the mould is filled with a composition consisting of very fine gravel parts, or other filling materials, and a polyester resin or other synthetic resin. Also accessories such as inside and outside corners and end pieces are described. NL 1006957 is not concerned with the compatibility between the binders of the top layer and of the core, nor with the adhesion between the core and the top layer of the bumper/fender.

DE 3145334 A1 describes a stairs step which is produced by applying on a glass plate a thin layer of a mixture on the basis of a resin "Feinschichtharz Nr. 325 ", which at 20°C ambient temperature has a gelation time of eight to twelve minutes, within which time the layer must have been applied. About 20 minutes, at the latest two hours, after the application of the thin layer on the glass, into the mould is poured the material for the filling layer, which is based on a polyester resin, and which is subsequently allowed to polymerize. The filling layer comprises 5 kg of polyester resin plus 1 liter (0.909 kg) of styrene as the curing resin components, together with 9 liter (9.9 kg) of quartz powder and 1 liter (1.3 kg) of quartz sand. This filling layer is thus comprising 33.83%wt or curing polymer relative to the dry amount of filling composition. The inventors have also found that the adhesion between the core and the top layer of DE 3145334 A1 may be further improved.

US 4346050 discloses a polymer bonded concrete having low binder levels, which is proposed as the construction material for precast panels for fascia panels for buildings and for wall cladding. The concrete object may be given a plastic-like finish by applying a coating of pigmented resin in the mould prior to casting of the concrete. The polymer concrete comprises at most 3.5%wt of polyester resin plus styrene. Half or more of the polymer concrete in US 4346050 consisted of round quartz aggregates in the range of at least 1/8" (3.18 mm) up to 1/2" (12.7 mm) or even up to 1" (25.4 mm). The average particle sizes of the round quartz aggregates used were thus 8 mm or higher. The applicants have reworked the product disclosed in US 4346050 and found that the low curing resin content makes the composition very difficult to process, has insufficiently low shrinkage such that the product is difficult to demould, and leads to a product that is too brittle for the shock plinth main application of the present invention. In addition, the surfaces of the obtained product have an unacceptably high roughness. They do not meet the tight dimensional tolerances required for a low seam connection between adjacent plinths and a low seam adherence to the wall. Neither do the products meet the quality and aesthetic requirements imposed by the food industry.

It is also not obvious how such plinths having both a core and a top layer on the basis of synthetic material may be produced in a simple way. It is important in this respect that the top layer is attached as tight as possible to the material of the core. And from an aesthetic point of view, it is also desirable to obtain very smooth outer surfaces. In addition, the upper layer with its high hardness also raises a problem of high brittleness, so that at the moment of mounting, wherein at times a pry bar must be used due to the weight of the element to be installed, there is a risk that flakes of the upper layer desquamate whereby the aesthetic effect is lost. The brittleness of both the upper layer and the core raises furthermore an additional problem that at unequal shrinkage of coating and core cracking may arise, making the product as such no longer useful and often must be disposed of as waste.

Thus, there remains a need for a simple process for the production of such cladding elements, wherein the top layer has a good adhesion with the core of the element, as well as to plinths or other cladding elements of which the plastic top layer and/or the core is less brittle than what so far is known in the art.

WO 2014/1149889 A1 discloses a method for the production of a plinth wherein a stainless steel mould is first polished with a release agent which is additionally polished. Into the polished mould is then applied a gel coat layer containing a polyester gel coat and an initiator, and the coated mould is stored during 20 minutes at 20°C to partially cure the gel coat layer, after which the mould is filled with a filling composition containing a solid mixture of quartz grains, silica sand and dolomite powder mixed in a 79/21 weight ratio with an unsaturated polyester resin binder further comprising 2% of Andonox KP-LE from Syrgis Performance Initiators AB (SE) as hardener plus 2% of Accelerator NL-49P from Akzo Nobel Polymer Chemicals BV (NL). The Andonox KP-LE hardener or catalyst comprises a mixture of two curing agents, i.e. methyl ethyl ketone peroxide as the faster and cumyl hydroperoxide as the slower, in dimethyl phthalate as carrier. The core was filled, vibrated and allowed to further react and cure by storage during about 2 hours, before the plinth product could be removed from the mould.

There remains a problem of reducing the curing time of the final product. Other problems that may be addressed are the high quantity of resin that is used in the art to make the filling composition for the core, the reuse of the moulds, the adhesion of gelcoat layer and core, and the risk for deformation during the curing of the final product.

The present invention aims to obviate or at least mitigate the above described problem and/or to provide improvements generally.

### SUMMARY OF THE INVENTION

The invention provides a process for the production of an article for the cladding of floors or walls, comprising the steps of, in a mould:
a) optionally applying a gel coat layer, based on a first curing polymer resin, on the inside of the mould in order to obtain a coated mould,
b) introducing into the core of the mould or into the core of the coated mould from step a) a filling composition which is based on a second curing polymer resin supplemented with at least one mineral filler, wherein the core of the article has a thickness of at least 10 mm, the filling composition for the core contains at least 11%wt and at most 20%wt of curing polymer resin, relative to the dry amount of filling composition, and the filling composition contains only one single initiator in a concentration of 0.5%wt to 5.0%wt, relative to the amount of curing polymer resin in the filling composition.

We have found, for thick objects made of unsaturated polyester concrete and contrary to what the prior art relating to initiators for unsaturated polyester resins teaches, that it is advantageous to use only one single initiator in combination with a reduced amount of reactive resin.

In the art of unsaturated polyester resins, it has up to now been taught that for objects of significant thickness, a combination of two initiators or hardeners should be used, i.e. one fast initiator and one slower initiator, to limit the exotherm of the curing reaction. This advice is particularly inspired by the risk for decolouration of the product. We have however found that the slow curing allows for stratification of the composition before the curing reaction has sufficiently proceeded, and also requires the curing product to stay long in the mould. The stratification of the composition, whereby more dense ingredients such as parts of the filler may settle under gravity, may lead to deformation of the product when it is released from the mould, which products are useless and have to be discarded.

We have found, by combining into a thick object a lower amount of curing polymer and a single initiator in the filling composition, that the curing may be made to happen much faster while the temperature during the curing stays within its allowable limits. We have found that the peak temperature under these circumstances still remains acceptably low, but that the curing time may be reduced significantly. In addition, the risk for product deformation is significantly reduced.

The applicants have also found that the present invention also brings the advantage that the temperature at the start of the curing of the core rises faster and that the peak temperature in the core is also higher. The applicants have found that the higher peak temperature during the curing of the core brings no problem of discolouration. The sharper and higher temperature profile during curing of the core brings the advantage, if styrene is present in the filling composition, that the concentration of styrene monomer remaining in the final product is reduced. This styrene monomer may release from the product, in particular when the product has to be cut or sawn to adjust its size to the allowed space. The present invention therefore brings an advantage in terms of industrial hygiene for the people installing the product. The reduced possible release of styrene is also very important in the food industry, because some foodstuffs have a tendency to absorb styrene, and may quickly become inedible because of an excessive styrene content.

The applicants have further found that the reduced presence of reactive polymer in the filling composition improves the fire performances of the final product, and that this improvement is noticeable in the results of fire tests according to international standards.

The applicants have found that the filling composition should also comply with the prescribed lower limit for curing polymer content. The applicants have found that this condition is important for obtaining a number of technical advantages. The higher curing polymer content makes the filling composition easier to mix up to obtain a more homogeneous mixture, to avoid warping of the final product, and easier to process the composition through the equipment. Another benefit is that the composition in the mould is easier to finish, and enables the achievement of a tight dimensional tolerance, which makes the products suitable for low seam adhesive joint for adhering the back of the object to another surface, and for low seam joints between adjacent objects adhered to the same surface. Also the surface finish requirements of the food industry may thereby more readily be met. Yet another advantage is that the higher curing polymer content also brings a more important shrinkage during the hardening, such that the finished product is easy to demould.

The applicants have found that the article as produced by the process according to the present invention comprising step a) is highly suitable in so-called "High Care" applications, such as in the mor sensitive areas of buildings in which on an industrial scale pharmaceuticals are produced, or in the food industry where foodstuffs are prepared and packaged. The applicants have found that the article as produced by the process according to the present invention not comprising step a) is highly acceptable in so-called "Low Care" applications, where the requirements in terms of industrial hygiene are less stringent.

### DETAILED DESCRIPTION

Unless specified otherwise, all values provided herein include up to and including the endpoints given, and the values of the constituents or components of the compositions are expressed in weight percent or % by weight of each ingredient in the composition.

As used herein, "weight percent," "wt-%," "percent by weight," "% by weight,", "ppmwt", "ppm by weight", "weight ppm" or "ppm" and variations thereof refer to the concentration of a substance as the weight of that substance divided by the total weight of the composition and multiplied by 100, unless specified differently. It is understood that, as used here, "percent," "%," are intended to be synonymous with "weight percent," "wt-%," etc.

It should be noted that, as used in this specification and the appended claims, the singular forms "a," "an," and "the" include plural referents unless the content clearly dictates otherwise. Thus, for example, reference to a composition containing "a compound" includes a composition having two or more compounds. It should also be noted that the term "or" is generally employed in its sense including "and/or" unless the content clearly dictates otherwise.

Additionally, each compound used herein may be discussed interchangeably with respect to its chemical formula, chemical name, abbreviation, etc..

In an embodiment of the present invention, the filling composition contains the one single initiator or hardener or catalyst in a concentration of at least 1.0%wt relative to the amount of curing polymer resin in the filling composition, preferably at least 1.25%wt,. The applicants have found that this contributes to the desired curing rate and to the final product properties. Optionally the filling composition contains at most 4.50%wt of the initiator, preferably at most 4.0%wt, more preferably at most 3.5%wt, even more preferably at most 3.0%wt, preferably at most 2.5%wt, more preferably at most 2.0%wt, even more preferably at most 1.5%wt. The applicants have found that there is no need to exceed the upper limit as specified, because extra initiator does not bring sufficient benefits in order to justify the higher level.

In an embodiment of the present invention, the core of the article has a thickness of at least 15 mm, preferably at least 20 mm, more preferably at least 25 mm, even more preferably at least 30 mm. The applicants have found that the advantages of the present invention become even more pronounced when the core of the article has a higher thickness. Optionally the core of the article has a thickness of at most 200 mm, preferably at most 175 mm, more preferably at most 150 mm, even more preferably at most 125 mm, preferably at most 100 mm, more preferably at most 80 mm, even more preferably at most 60 mm. The applicants have found that it is advantageous to limit the thickness of the core as specified, because extra thickness does not bring much additional mechanical properties but adds to the weight and the material use of the article, which increases the costs of production and of the handling of the article.

In an embodiment of the present invention, the core is fibre-reinforced. The applicants prefer in particular to reinforce thinner products with a fibre layer. The applicants prefer to use glass fibre for the reinforcement. The applicants prefer to introduce the fibre reinforcement, on top of the core after the filling composition is introduced and equalized.

In an embodiment of the present invention, the filling composition for the core contains at most 19%wt of curing polymer resin, preferably at most 18%wt, more preferably at most 17%wt, even more preferably at most 16%wt, preferably at most 15%wt, more preferably at most 14%wt, even more preferably at most 13%wt, preferably at most 12%wt, more preferably at most 11%wt of the second curing resin. The applicants have found that the lower the concentration of curing polymer resin in the filling composition, the sharper the temperature profile during curing may be, and hence the more active the hardener may be selected.

According to the invention, the filling composition contains at least 11%wt of the second curing resin. The applicants have found that the higher the concentration of the second curing resin in the filling composition, the better the mechanical properties of the core are.

In principle, a wide variety of thermosets or thermosetting polymers or polymer resins may be used within the framework of the present invention. Alkyd resins, phenol formaldehyde (PF) resins, diallyl phthalate (DAP) resins, melamine-formaldehyde (MF) resins, polyester resins, and urea-formaldehyde (UF) resins are possible.

The inventors however prefer to use unsaturated polyesters, because these resins take up virtually no moisture, may even be water repellent, are good cold and heat resistant, are well resisting to acids, oxidizing agents and dilute alkalis, are good resisting to sunlight, are very wear resistant, are highly pressure-resistant, may give a high gloss, and are not affected by bacteria and fungi. Moreover, they are easy to handle, the curing reaction is easy to start and the reaction rate is easy to steer, and this within a wide temperature range which is easy to reach and typically includes the normal ambient temperature and/or room temperature. The inventors have also found that the cured polyester based bumpers/fenders have an impact resistance that is twice as high as concrete. An additional advantage is that these polyesters also undergo a slight shrinkage during curing, rendering the demoulding of the products much easier.

In an embodiment of the present invention, the second curing polymer belongs to the family of unsaturated polyester polymer resins, and wherein preferably for the curing reaction a vinyl monomer has been incorporated, more preferably styrene.

In the filling composition for the core, which is applied in step b), the applicants prefer to use a composition which is also based on unsaturated polyester resin as a binder, together with at least one mineral filler.

Unsaturated polyesters are curing polymer resins. Generally, they are copolymers obtained by the polymerisation of one or more polyols, usually diols, such as monoethylene glycol (MEG), with unsaturated dicarboxylic acids such as maleic acid or fumaric acid, and/or the anhydrides thereof. Hereby also partially saturated and/or aromatic acids and/or their anhydrides may be used, such as the various forms of phthalic acid or phthalic acid anhydride. The double bond of the unsaturated polyesters reacts during curing with a vinyl monomer, usually styrene, so that a three-dimensional cross-linked structure is formed. The cross-linking is usually set in motion by an exothermic reaction in which an organic peroxide may be used as an initiator, often also called less accurately the catalyst, such as methyl ethyl ketone peroxide, benzoyl peroxide or dibenzoyl peroxide. The initiator usually acts by releasing a free radical which initiates the polymerization or chain reaction.

As vinyl monomer usually styrene, α-methyl styrene, para- or meta-styrene, divinyl benzene, diallyl phthalate and prepolymers thereof, diallyl isophthalate, diallyl terephthalate, or prepolymers thereof, N-vinyl pyrrolidone, triallyl cyanurate, diallyl melamine, or the like, alone or in mixtures with each other are being used. Other vinyl monomers which may be used are the alkyl-styrenes, and other allyl, acrylate or methacrylate esters.

Suitable unsaturated polyesters are commercially offered by many companies, and are available in a wide range of properties. Such polyesters are also commercially available in mixtures with styrene so that they may immediately be used as a binder in the step b) of the method according to the present invention.

In an embodiment of the present invention, the one single initiator in the filling composition is an organic peroxide, more preferably methyl ethyl ketone peroxide (MEKP).

The cross-linking or curing reaction with unsaturated polyester resins is preferably a free radical polymerization reaction. This reaction is preferably initiated by an initiator, also called curing agent, a.k.a. hardener or catalyst. As initiator for the curing reaction, preferably peroxides are used, often a combination of several peroxides, more preferably organic peroxides because they are less volatile, and because they may often be supplied as a liquid. Suitable are, for example, hydrogen peroxide, benzoyl peroxide, lauryl peroxide, dicumyl peroxide, p-tertiary butyl perbenzoate, acetyl acetone peroxide (AAP), methyl isobutyl ketone peroxide, and the like. The applicants prefer to use methyl ethyl ketone peroxide (MEKP). MEKP gives a reliable performance at ambient temperature and at room temperature. The MEKP is normally supplied as a 30-40 wt% solution in a suitable solvent such as, for example, dimethyl phthalate ester. In addition, preferably, a phlegmatiser is added, which is a substance which stabilizes the relatively unstable peroxide during storage and for transport and handling, until it is expected to carry out its action. As a phlegmatiser, for example, 2,2,4-trimethyl-1,3-pentanediol diisobutyrate, also known as TXIB, may be used. Also other organic compounds having little to no of the relatively less stable -CH₂- groups may be used. The initiator brings the advantage that the cross-linking or curing reaction may be initiated at ambient and/or room temperature. As a result, extremely high temperatures are avoided, which may otherwise lead to discolouration in thin products are in top layers, and even to a loss of the chemical and mechanical properties of the product.

The applicants prefer to apply the curing agent in a concentration of 1.0-5.0% by weight relative to the total amount of resin, preferably 1.2-4.0% by weight, more preferably 1.4-3.0% by weight, even more preferably 1.5-2.5% by weight, and yet more preferably 1.8-2.2 wt%, typically about 2.0 wt%, and this on the basis of the weight of the total amount of resin, including the other monomers such as the vinyl monomer and/or DCPD, in the composition.

In an embodiment of the present invention wherein the process comprises step a), the first and the second curing polymer resins belong to the same chemical family of curable polymeric resins. The applicants have found that this improves the adhesion between the gel coat layer and the core.

In an embodiment of the present invention wherein the process comprises step a), the gel coat layer in the coated mould of step a) is only cured partially before the coated mould of step a) is subjected to step b).

In an embodiment of the present invention wherein the process comprises step a), the curing polymer resin of step a) is cured only until the gel coat layer is at most touch dry, before the coated mould of step a) is subjected to step b).

We have found that the process according to the present invention is extremely simple, and moreover, if the process comprises step a), because the gel coat layer is only cured partially before the filling composition is introduced in step b), preferably only until the gel coat layer is at most touch dry, provides without any layer of glue an exceptionally good adhesion between the gel coat upper layer and the core of the produced product. We have also found that by an appropriate selection of the raw materials, and by addition and appropriate selection of additives, initiators, accelerators and/or retarders, the course of the curing of the resins of step a) and step b) may be set independently from each other, so that they optimally meet the stated requirements and, at the same time may be adjusted to each other to be able to produce a product with the desired properties in a simple and fast way, and this with relatively little human intervention.

In an embodiment of the present invention wherein the process comprises step a), the first curing polymer resin belongs to the family of unsaturated polyester polymer resins, and wherein preferably for the curing reaction a vinyl monomer has been incorporated, more preferably styrene.

Unsaturated polyesters are curing polymer resins. Generally, they are copolymers obtained by the polymerisation of one or more polyols, usually diols, such as monoethylene glycol (MEG), with unsaturated dicarboxylic acids such as maleic acid or fumaric acid, and/or the anhydrides thereof. Hereby also partially saturated and/or aromatic acids and/or their anhydrides may be used, such as the various forms of phthalic acid or phthalic acid anhydride. The double bond of the unsaturated polyesters reacts during curing with a vinyl monomer, usually styrene, so that a three-dimensional cross-linked structure is formed. The cross-linking is usually set in motion by an exothermic reaction in which an organic peroxide may be used as an initiator, often also called less accurately the catalyst, such as methyl ethyl ketone peroxide, benzoyl peroxide or dibenzoyl peroxide. The initiator usually acts by releasing a free radical which initiates the polymerization or chain reaction.

As vinyl monomer usually styrene, α-methyl styrene, para- or meta-styrene, divinyl benzene, diallyl phthalate and prepolymers thereof, diallyl isophthalate, diallyl terephthalate, or prepolymers thereof, N-vinyl pyrrolidone, triallyl cyanurate, diallyl melamine, or the like, alone or in mixtures with each other are being used. Other vinyl monomers which may be used are the alkyl-styrenes, and other allyl, acrylate or methacrylate esters.

Suitable unsaturated polyesters are commercially offered by many companies, and are available in a wide range of properties. Such polyesters are also commercially available in mixtures with styrene so that they may immediately be used as a binder in the step b) of the method according to the present invention.

The compositions of the process according to the present invention are preferably based on a polyester, such as obtained by the esterification of a polyvalent carboxylic acid with a polyol, which means a chemical substance having at least two hydroxyl (OH) groups.

The polyvalent carboxylic acid of the polyester resin may be aliphatic or aromatic. The applicants prefer to use a polyester formed from an aromatic polyvalent carboxylic acid. Suitable candidates are, for example, phthalic acid, also called orthophthalic acid, isophthalic acid and/or terephthalic acid, but also acids with several benzene nuclei are possible. The applicants prefer a gel coat which is based on orthophthalic acid, most preferably based primarily on orthophthalic acid.

There are many polyols which may be used in the polyester according to the present invention. Suitable are, for example, ethylene glycol, 1,2-propylene glycol, 1,3-propylene glycol, 1,3-butanediol, 1,4-butanediol, diethylene glycol, dipropylene glycol, neopentyl glycol, and bis-(β-hydroxypropyl)ether of bisphenol A. The applicants prefer a polyol which has only two hydroxyl functions per molecule. Suitable candidates are available in large numbers, such as ethylene glycol, mono-ethylene glycol, ethylene glycol oligomers such as diethylene glycol, triethylene glycol, and tetraethylene glycol, 1,2-propanediol, 1,3-propanediol or oligomers thereof, such as dipropylene glycol and other polypropylene glycols, 1,2-butanediol, 2,3-butanediol, 1,4-butanediol, 1,5-pentanediol, 1,8-octanediol, 1,3-butanediol, 1,2-pentanediol, 2-methyl-2,4-pentanediol, neopentyl glycol, bisphenol A, the bis-(β-hydroxypropyl)ether of bisphenol A, and others.

Together with a divalent carboxylic acid, a divalent polyol gives a so-called "linear" polyester. This avoids excessive cross-linking, such that the viscosity of the polyester is kept quite low, so that the substance which contains the polyester is sufficiently well spreadable or sprayable, or that it flows sufficiently easily enough before the curing step, so that a good adaptation to the mould, or a good filling of the given space, may readily be achieved, with a minimum of effort. The applicants prefer a gel coat which is primarily based on a resin made from virtually pure isophthalic acid together with neopentyl glycol.

In the manufacture of the unsaturated polyester, often unsaturated carboxylic acids are used. Suitable are ethylene-like α,β-unsaturated dicarboxylic acids, for example maleic acid, fumaric acid, citraconic acid, itaconic acid, mesaconic acid and the like, or the anhydrides thereof.

In the production of the unsaturated polyester, often also saturated carboxylic acids are used. Suitable are (ortho-)phthalic acid, or its anhydride, tetrahydrophthalic acid (or its anhydride), hexahydrophthalic acid (or its anhydride), isophthalic acid, terephthalic acid, adipic acid and succinic acid or butanoic divalent acid.

As chain terminators monohydric alcohols or acids may be used in the production of the polyester monomers which may be used as raw materials in the present invention. In addition, these components may be used either straight chained or branched. Also useful are polyhydric alcohols, such as glycerine, trimethylolpropane, pentaerythritol or the like, for obtaining, where possible, already some cross-linking in the monomer.

The polyesters are often offered as a solution in a liquid vinyl monomer, preferably styrene. The formulation is subsequently diluted, also called "modified" by the addition of dicyclopentadiene (DCPD). This DCPD provides additional cross-linking of the finally cured polymer, and because the reagent is a liquid, it allows to use less styrene for reaching the same low viscosity for the gel coat, in order to allow proper processing. For the gel coat, the applicants thereby prefer sometimes a "preaccelerated" version of this gel coat, wherein an amount of catalyst is added to obtain a faster curing reaction. As the catalyst, methyl ethyl ketone peroxide (MEKP) is preferably used, but other peroxides such as acetyl acetone peroxide (AAP) are suitable. Before the curing begins, this gel coat preferably has a viscosity of 2000 to 30000, preferably from 5000 to 25000, more preferably of from 8000 to 20000, and most preferably from 10000 to 18000 millipascal-second (mPa.s) or centipoise (cPs) at 20°C, measured according to NFT 51 210, with a Brookfield RVF 100 meter, using a No. 5 spindle at 20 revolutions per minute. Suitable versions are available as gel-coat HPH 6098 ST Paraf. from Ferro Plastics Europe, but also as polyester gel coat GC 875 9270 from Nord Composites.

In an embodiment of the present invention wherein the process comprises step a), the first curing polymer resin has a gel time of at least 10 minutes, preferably at least 11 minutes, and optionally at most 20 minutes, preferably at most 18 minutes, more preferably at most 16 minutes. The applicants have found that this selection of curing polymer resin causes the full curing of the gel coat to be slower, and that this improves the adhesion between the core and the gel coat layer, while it remains the desired property that the gel coat, after having been applied to the mould, becomes quickly "touch dry", as fast as within 40 minutes, and ready for accepting the filling composition into the mould.

The applicants prefer to use a gel coat obtainable from Polyprocess (FR) polyester gel coat Iso/NPG, type GCIG Serie W-VM, which has a gel time in the range of 11-16 minutes.

The cross-linking or curing reaction with unsaturated polyester resins is preferably a free radical polymerization reaction. This reaction is preferably initiated by an initiator, also called curing agent, a.k.a. hardener or catalyst. As initiator for the curing reaction, preferably peroxides are used, often a combination of several peroxides, more preferably organic peroxides because they are less volatile, and because they may often be supplied as a liquid. Suitable are, for example, hydrogen peroxide, benzoyl peroxide, lauryl peroxide, dicumyl peroxide, p-tertiary butyl perbenzoate, acetyl acetone peroxide (AAP), methyl isobutyl ketone peroxide, and the like. The applicants prefer to use methyl ethyl ketone peroxide (MEKP). MEKP gives a reliable performance at ambient temperature and at room temperature. The MEKP is normally supplied as a 30-40 wt% solution in a suitable solvent such as, for example, dimethyl phthalate ester. In addition, preferably, a phlegmatiser is added, which is a substance which stabilizes the relatively unstable peroxide during storage and for transport and handling, until it is expected to carry out its action. As a phlegmatiser, for example, 2,2,4-trimethyl-1,3-pentanediol diisobutyrate, also known as TXIB, may be used. Also other organic compounds having little to no of the relatively less stable -CH₂- groups may be used. The initiator brings the advantage that the cross-linking or curing reaction may be initiated at ambient and/or room temperature. As a result, extremely high temperatures are avoided, which could otherwise lead to discolouration, and even to a loss of the chemical and mechanical properties of the product.

In an embodiment of the present invention wherein the process comprises step a), the gel coat layer in step a) comprises at least one initiator, preferably only one initiator, preferably an organic peroxide, more preferably methyl ethyl ketone peroxide (MEKP). The applicants have found that the initiator brings the advantage that the temperature window in which the curing of the gel coat may start becomes wider, and may be made to include room temperature. The selection of MEKP further contributes to achieving the fast partially cured, preferably "touch dry", gel coat in the mould such that the mould may relatively quickly be subjected to step b), and this while it maintains the desired property of a slower full curing of the gel coat, as explained above.

The applicants prefer to use in the gel coat layer a high concentration of gel coat, such as at least 60 wt% based on the total gel coat layer, preferably at least 70 wt%, still more preferably at least 80 wt%, preferably at least 90 wt%, more preferably at least 95 wt%, still more preferably at least 98 wt%. The applicants prefer to use no or very little fillers in the gel coat layer, because thereby a smoother outer surface of the cladding element is obtained. Preferably the applicants add a pigment to the gel coat layer.

The applicants prefer to provide in the gel coat layer also a curing agent or initiator, as explained above. Preferably, the applicants prefer the methyl ethyl ketone peroxide as the sole curing agent. This curing agent is preferably used as a 30-40 wt% solution in 40-50 wt% dimethyl phthalate, along with a 10-20% TXIB as phlegmatiser or stabilizer. A suitable curing agent solution is, for example, available as Andonox KP-100 of the company Norac ANDOS AB, Norpol Peroxide 1 obtainable from United Initiators (DE), and Butanox M-50 obtainable from Akzo Nobel Functional Chemicals (NL). Curing agent concentrations referred to in this document are intended to be the concentrations of the curing agent solution, including the solvent and stabilizer, and any other ingredients of the solution.

The applicants prefer to apply the curing agent in a concentration of 1.0-5.0% by weight of the gel coat layer, preferably 1.2-4.0% by weight, more preferably 1.4-3.0% by weight, even more preferably 1.5-2.5% by weight, and yet more preferably 1.8-2.2 wt%, typically about 2.0 wt%, and this on the basis of the weight of the total amount of resin, including the other monomers such as the vinyl monomer and/or DCPD, in the gel coat layer.

In an embodiment of the present invention, the filling composition for the core in step b), and/or, if step a) is present the gel coat layer in step a) further comprises an accelerator for the curing reaction, preferably an organometallic compound, more preferably an organic cobalt salt, even more preferably cobalt octanoate.

For accelerating the curing reaction frequently an accelerator is used. Suitable are, for example, the salts of cobalt, manganese, vanadium and iron, β-diketones selected from derivatives of acetyl acetone, derivatives of aceto acetamide, and esters of aceto acetic acid, but also tertiary aromatic amines such as, for example, dimethyl aniline, dimethyl-p-toluene, diethyl aniline, phenyl diethyl aniline, phenyl-diethanol amine, and the like. These are typically used in concentrations of 0.05-1.0 parts by weight per hundred parts of resin. With metal components thus usually only the concentration of the metal is intended.

As the reaction accelerator or accelerator the applicants preferably use cobalt, more preferably a cobalt compound, more preferably an organometallic cobalt compound. Particularly suitable is cobalt octanoate, containing cobalt at 6% by weight, which is effective in small amounts, such as from 0.10-0.30 wt%, preferably 0.15-0.20% by weight, based on the resin. The applicants have found that this accelerator is very suitable in these concentrations, together with 1.0-3.0 wt% MEKP initiator, preferably 1.5-2.5% by weight of MEKP.

The applicants prefer to use in the gel coat layer a high concentration of gel coat, such as at least 60 wt% based on the total gel coat layer, preferably at least 70 wt%, still more preferably at least 80 wt%, preferably at least 90 wt%, more preferably at least 95 wt%, still more preferably at least 98 wt%. The applicants prefer to use no or very little fillers in the gel coat layer, because thereby a smoother outer surface of the cladding element is obtained. Preferably the applicants add a pigment to the gel coat layer.

In an embodiment of the present invention wherein the process comprises step a), the gel coat layer contains a suitable amount of titanium dioxide as pigment. The titanium dioxide acts as a pigment, but also performs as a filler. In addition, the titanium dioxide brings an antibacterial function, presumably but not necessarily one of bacterial repulsion, a function which is highly appreciated in sensitive applications, a.o. in the food industry.

In the composition for the filling of the core in step b), applicants prefer to use a significant amount of filler material. This provides important mechanical properties to the core, and is also more readily available than the binder, so that the products of the process according to the present invention may be provided for many applications, and may offer therein an economically valuable alternative when compared to other products which are produced on a different base.

As filling material a wide range of possible candidates may be designated as being suitable. In principle all solids on which the binder is prepared to adhere could be used as granulate, including recycled plastics.

The applicants however prefer to use at least partially mineral filler material, most preferably only mineral filling material, mainly because this is chemically less active, usually even inert, and hence there is no influence on the cross-linking of the filler material and/or curing reaction. In addition, mineral fillers usually have a lower porosity than for example plastics, whereby they take up less of the binding agent and the amount of resin does not have to be increased to compensate for such absorption. An additional advantage is the generally common availability of suitable mineral fillers.

In an embodiment of the present invention, the mineral filler in step b) is selected from the list consisting of quartz, preferably quartz grains, more preferably quartz grains having an average particle size in the range of 1 to 3 mm, more preferably dried quartz grains, sand, preferably sand which has been dried and sieved, dolomite powder, and mixtures or combinations thereof.

The applicants prefer a mineral filler of which the particles have been obtained by breaking, rather than round aggregates. The applicants have found that this provides for a better binding of the curing resin to the filler at the corners of the product.

The applicants have found that a combination of a first filler, which comprises larger grains, with a second filler having a finer grain size, gives a very good degree of filling, and yet allows to limit the amount of polymer resin which is required as the binder. The applicants prefer that the smaller grains are selected such that they fit into the spaces of a stacking of the larger grains, so that they at least partly fill the spaces between the large grains with filler material, and that there is therefore less binder material is required. Therefore, the applicants prefer to use a mixture of a first filler with grains which have an average diameter in the range of 0.5-5 mm, preferably at least 1.0 mm, and also preferably not more than 4 mm, more preferably not more than 3 mm, with a second filler with fine grains having an average diameter in the range of 50-500 µm, preferably 100-400 µm, more preferably 150-350 µm, more preferably 200-300 µm and at still more preferably 235-280 µm.

The applicants prefer to use a mixture comprising 56 parts by weight of quartz grains having an average particle diameter in the range of 1 to 3 mm, and 32 parts by weight of quartz sand with a mean particle diameter (D50) of about 260 µm.

As first filler, many suitable candidates are available. The applicants prefer to use EIFEL quartz, 1-3 mm, , available from EUROTREX or EIFEL QUARTZ 1/3 from E.VICTOR-MEYER (BE). As second filler a whole range of suitable candidates are also available. Applicants prefer to use M32 quartz sand, available from SIBELCO Benelux (BE).

The applicants have found that the filling properties of the filler material may be further improved by the addition of a third filler with an even smaller grain size, which is suitable for also filling the smaller spaces between the grains of the second filler. The inventors prefer the third filler having an average grain diameter (D50) in the range of 5-200 µm, preferably 10-100 µm, more preferably 20-70 µm and even more preferably 30-50 µm. Many suitable filler powders are available. The applicants prefer therefore to use dolomite, which consists for about 99 wt% of calcium magnesium carbonate CaMg(CO₃)₂, such as dolomite powder Microdol A 70 available from OMYA Benelux. This powder also has the advantage that it also serves as a pigment, and makes the colour of the composition lighter, which is favourable in order to have no effect on the colour which the gel coat layer brings.

The applicants prefer to use a mixture of about 56 parts of the dried silica 1-3 (for example 1-3 EIFEL quartz) with about 33 parts of treated sand (for example, M32 SIBELCO quartz sand) in which further approximately 11 parts of dolomite powder (for example Microdol A70 of OMYA or Madol 100 of E.VICTOR-MEYER) is incorporated.

In an embodiment of the present invention using a mineral filler comprising dolomite powder, the dolomite powder has a pH of at most 9.5, preferably at most 9.0, more preferably at most 8.5, even more preferably at most 8.0, preferably at most 7.5, more preferably at most 7.0, more preferably at most 6.5, and optionally at least 5.5, preferably at least 6.0. The applicants have found that bringing the pH of the dolomite powder in compliance with the prescribed limits brings the advantage that the dolomite powder absorbs less resin, such that more resin remains available as a binder for the composition. The applicants have found that this feature on the dolomite powder allowed to reduce the amount of binder in the composition for obtaining the same final product properties. The applicants have found that this feature allowed to reduce the binder concentration in the filling composition significantly. The applicants prefer to use dolomite powder Madol 100 obtainable from E.VICTOR-MEYER (BE), which has a pH of 6.38.

In an embodiment of the present invention, the mould before step b), or if the process comprises step a) before the application of the gel coat layer in step a), is treated with a release agent.

In order to more easily remove the product from the mould, after the optional curing of the gel coat layer and of the curing of the composition in the core, the inventors prefer that the mould be rubbed in with an external release agent or a release wax (also called "mould release agent" or "mould release wax"). In one embodiment of the method according to the present invention, the mould is, before step b) or before the application of the gel coat layer in step a), rubbed in with a release agent (mould release agent, release wax). This release wax is preferably polished into the mould, as this gives a smoother outer surface of the produced article, which increases the aesthetic appearance, but also the hygienic aspect of the object.

Many substances and compositions are suitable as a release agent. The applicants prefer to use silicone-free formulations, to avoid unwanted colour effects on the cured gel coat layer. Better are versions with little or no own colour, preferably transparent, and having a colour of not more than 6 Gardner (ASTM D 1544-80), and more preferably not more than 4 Gardner, because they do not materially affect the colour of the product. The applicants prefer to use a hydrocarbon mixture, or a derivative thereof. Very suitable are, for example, hydrogenated petroleum distillates, preferably the heavier fractions having a boiling point of at least 140°C, and preferably also having a flash point (closed cup) of at least 24°C. These heavier fractions impose lesser requirements relating to industrial hygiene and safety. However, we prefer to use at least partially fractions which are not too heavy, preferably the "middle distillate" fractions, also known as kerosene or diesel oil types. Heavier fractions, such as waxes, may then be dissolved therein. Even more suitable are those fractions which are also desulphurized down to a low content of sulphur, such as at most 50 ppm by weight, preferably at most 30 ppm by weight, and even more preferably at most 10 ppm by weight. Thereby they also offer a better chemical resistance, and higher resistance to discolouration, usually yellowing, and they are also suitable for food contact. Suitable products are for instance Ce-Sense Slip-X10 available from Brands Structural Products (NL).

The release agent may be applied by hand or by spraying. Preferably, the release agent is first left to dry before it is polished to a high gloss. On new or cleaned moulds, the material is preferably thinly applied 2-3 times to obtain a good coverage and a uniform thickness.

The applicants prefer that this external release agent is applied in a very homogeneous thin layer with a very smooth top surface. This ensures that the top surfaces of the product of the method which were in contact with a wall of the mould, obtain a very smooth aspect, and even become glossy.

In addition, also an internal release agent may be used. Many materials are suitable for this. The applicants prefer ADDITIV MIKON^{®} INT-250 from MÜNCH-CHEMIE, to be used as an additional ingredient in the gel coat layer.

In an embodiment of the present invention, the release agent comprises a polymeric resin, preferably dissolved in an aliphatic hydrocarbon solvent. The applicants prefer to use as the release agent the product obtainable from the company Marbocote Ltd (UK) under the brandname and type SPRAYCOTE FD. The applicants have found that this type of release agent provides several advantages. This type of release agent is semi-permanent, in that the mould to which this type of release agent has been applied may be reused more than three times before another layer of release agent needs to be applied. The applicants have further found that the mould does not need cleaning before this next layer of release agent may be applied, a cleaning that was necessary with other types of release agents in order to remove contamination which lead to dull and/or rough surfaces and product rejection. These advantages bring significant reductions in the amount of human intervention that the process according to the present invention requires. The applicants have further found that this type of release agent brings a better gloss and surface smoothness of the final product, elements which highly contribute to better aesthetics and a higher quality impression.

In an embodiment of the present invention wherein the process comprises step a), the gel coat layer is applied by means of a technique selected from the list of spreading, for example with a brush and/or roller, spraying, and combinations thereof, preferably by spraying with a spray gun under pressure.

In an embodiment of the present invention, to the polymer resin of the core and/or of the gel coat layer, a.k.a. as the top layer, at least 0.5% and at most 20% by weight is added, expressed on the basis of the total amount of polymer resin in the top layer or in the core, of an additional unsaturated polyester resin which is characterized by an elongation at break after curing of the resin and tested according to ISO 527 of at least 4.0%.

Preferably, the elongation at break of this additional unsaturated polyester resin, after curing of the resin and tested according to ISO 527, is at least 5.0%, more preferably at least 10%, even more preferably at least 20%, preferably at least 30%, more preferably at least 40%, and still more preferably at least 45%. If necessary, this resin may be chosen so that the elongation at break is not more than 100%, preferably not higher than 75%, and more preferably not higher than 60%. In this way, the risk is reduced that the hardness would be reduced.

The resin is usually obtained by making the polyester chain somewhat longer, preferably by incorporation of longer polyol monomers, preferably polyol monomers of which the chains are not strictly linear, but exhibit angles. Thus, one may, for example, instead of using only mono-ethylene glycol, also use oligomers thereof, preferably those which contain one or more ether functions as part of the chain. Thus, one may for example use triethylene glycol or tetraethylene glycol in the production of these polyesters. Also, one may start from a mixture of polybasic carboxylic acids, or produce polyesters with longer chain lengths, in order to obtain a polyester which will form less crystalline and more amorphous regions, so that the cured resin exhibits a certain degree of elasticity.

The inventors preferably use for the core not more than 15% by weight of this additional polyester resin, and this primarily because the hardness of the final product should not decrease too much. More preferably, the inventors use a maximum of 10% by weight, even more preferably at most 5% by weight, and even more preferably at most 3% by weight of this additional resin, and this relative to the total amount of resin which is used in the filling composition of the core.

In the gel coat layer, the inventors preferably use not more than 16% by weight of this additional polyester resin. More preferably, the inventors use a maximum of 12% by weight, even more preferably at most 9% by weight, and yet more preferably at most 7% by weight of this additional resin, and this relative to the total amount of resin which is used in the filling composition of the gel coat layer. The inventors preferably use in the gel coat layer at least 2% by weight, more preferably at least 3% by weight and even more preferably at least 4% by weight, expressed on the same basis. This quantity has been found to be sufficient for giving the desired properties to the gel coat top layer. As discussed later, this additional resin may also be used as pre-mixed.

The inventors have found that this additive gives a higher elasticity to the cured gel coat layer and/or to the cured core. This offers several advantages. The addition to the core offers the advantage that residual stresses are reduced which may arise from differences in shrinkage in the core itself, due to possible local differences in composition, but also between the core and the gel coat layer. The stresses may be reduced, and less likely lead to cracks, so that there are much less end-products which have to be rejected or further treated to remain useful.

This addition of the additional polyester resin also has the advantage that, when installing the cladding element, which, depending on its size, may have a considerable weight, and, therefore, often has to be placed with the help of mechanical tools such as a crowbar, there is less risk for flaking off of the gel coat layer, so that the aesthetic effect is better preserved, and fewer elements turn useless during the installation and must be replaced and/or discarded.

In an embodiment of the present invention, the filling composition further contains a substance which is selected from a dye, a pigment, paint flakes, metal flakes, and combinations thereof. For example, the filling composition may be pigmented with a wide choice of pigments, in every available colour, for example, with each of the available RAL colours. The applicants have found that the article as produced by the process according to the present invention without step a), may be given a more aesthetic appeal, which makes the article more acceptable for many applications. The applicants prefer to use a pigment, preferably a white pigment, in a concentration of at least 0.05%wt and at most 2.0%wt relative to the total weight of the filling composition, preferably at least 0.1 %wt, more preferably at least 0.2%wt, even more preferably at least 0.3%wt and optionally at most 1.5%wt, preferably at most 1.0%wt, more preferably at most 0.6%wt, even more preferably at most 0.5%wt on the same basis. The applicants have found that the addition of this pigment also reduces the viscosity of the filling composition, such that it is easier to process and more readily provides for smooth surfaces of the article produced.

In an embodiment of the present invention wherein the process comprises step a), the gel coat layer further contains a substance which is selected from a dye, a pigment, a filler, paint flakes, metal flakes, and combinations thereof. For example, the gel coat layer may be pigmented with a wide choice of pigments, in every available colour, for example, with each of the available RAL colours. Without the addition of a dye optionally also a transparent version is possible.

In an embodiment of the present invention wherein the process comprises step a), the partial curing of the gel coat layer comprises the retention of the coated mould in an environment with a temperature in the range of from 10°C to 50°C, preferably at least 15°C and more preferably at least 18°C, and optionally not more than 35°C, preferably at most 30°C, even more preferably at most 25°C, and still more preferably at most 23°C. The storage preferably occurs for a period of time of at least 2 minutes, preferably at least 5 minutes, even more preferably at least 10 minutes, and yet more preferably at least 15 minutes. Optionally, the retention takes no longer than 24 hours, preferably no longer than 18 hours, more preferably no longer than 12 hours, and even more preferably at most 6 hours.

In an embodiment of the present invention, the filling composition for step b) is obtained by first dry blending of the mineral filler material, if present with other dry ingredients of the filling composition, followed by the injection of the curing polymer resin, preferably as a mixture which possibly shortly before the injection was mixed with the initiator and/or with at least one and preferably all of the other liquid ingredients of the filling composition, and subsequently mixing of the liquid and the solid ingredients of the filling composition, preferably by means of a worm wheel or an Archimedes screw which brings the filling composition while mixing at or above the coated mould. The applicants have found that this step is very easy to carry out and may readily be automated. The applicants have found that suitable machines are offered to execute this step. The applicants prefer to use a mixing machine which is derived from the type Perfecta, available from the company ADM Monobloc (DE).

In an embodiment of the present invention, as part of step b), after the insertion of the filling composition in the core of the coated mould, the mould is being vibrated, possibly in more than one cycle, each time with an interval, between which the mould may be transferred to a different location, and wherein preferably the vibration occurs at a frequency of a number of cycles per minute which is in the range of 10 to 600 cycles per minute, and this for a total vibration time which is in the range of 15 seconds to 2 minutes. This additional feature provides for a good filling of the core volumes, by a thorough deaeration of the filling composition under curing. It also improves the adhesion between the two components of the product, namely the gel coat layer and the composition which fills the core of the coated mould.

In an embodiment of the present invention, as part of step b), upon introduction of the filling composition into the core of the coated mould the amount of introduced filling composition is accurately proportioned and limited in such a way that, if present after shaking, it fills at least 100% of the remaining free volume of the mould and not exceeding 105% of that remaining free volume.

### EXAMPLE

A stainless steel mould for a plinth is polished with a layer of Marbocote^{®} Spraycote FD obtained from the company Marbocote Ltd (UK) and applied by brush. With a soft cloth, this release is wax very thoroughly spread into all irregularities and corners of the mould, and the wax is additionally polished until the wax layer provides a very smooth inner surface. Into the polished mould is subsequently applied a gel coat layer, by means of a spray gun. The gel coat layer contains 98 wt% polyester gel coat Iso/NPG GCIG Serie W-VM obtained from Polyprocess (FR), which already contained titanium dioxide, in which was further added 2.0 wt% Norpol Peroxide 1 obtained from United Initiators (DE).

The coated mould is stored during 20 minutes in an environment with a temperature of 20°C to partially cure the gel coat layer. Subsequently, the core of the mould is filled with a filling composition.

The following solid materials are mixed in the indicated quantities by weight:
- 56 parts of quartz grains EIFEL QUARTZ 1/3 from E.VICTOR-MEYER (BE),
- 32 parts quartz sand M32 from SIBELCO Benelux (BE), and
- 12 parts dolomite powder Madol 100 from E.VICTOR-MEYER (BE), which has a pH of 6.38.

The EIFEL QUARTZ 1/3 were quartz sand-size aggregates having particles in the size range of 1 to 3 mm. The SIBELCO M32 was quartz sand having a d50 of about 260 µm. The Madol 100 was a pure white dolomite having a d50 of about 10 µm.

In order to prepare the filling composition for the core, this solid mixture was blended in a ratio of 89/11 with a polyester resin binder, consisting of 96 wt% Poliplast R 96.02 obtained from Carlo Ricco' & F.lli S.p.A. (IT), wherein as hardener 2.0 wt% Butanox M-50 obtained from Akzo Nobel Functional Chemicals (NL), which comprises MEKP as the sole curing agent, and as accelerator 2.0 wt% Accelerator NL-49P obtained from Akzo Nobel Polymer Chemicals BV (NL) were added.

The core of the coated mould was filled with a slight excess of the filling composition, and immediately vibrated to promote a good filling and to obtain a good deaeration of also the core of the product. The filled mould was allowed to further react by storage at about 18°C during a period of at most 40 minutes hours.

The product was subsequently removed from the mould, which was easily possible thanks to the small shrinkage inherent with the use of the polyester binder. The product exhibited very smooth surfaces where the product had been in contact with a wall of the mould.

The used mould was clean and still contained sufficient release agent so that it immediately a new gel coat layer could be sprayed in and the production of a new plinth in the same mould could be started from that point onwards on.

Having now fully described this invention, it will be appreciated by those skilled in the art that the invention can be performed within a wide range of parameters within what is claimed, without departing from the scope of the invention, as defined by the claims.

## Claims

1. A process for the production of an article for the cladding of floors or walls, comprising the steps of in a mould:
a) optionally applying a gel coat layer, based on a first curing polymer resin, on the inside of the mould in order to obtain a coated mould,
b) introducing into the core of the mould or into the core of the coated mould from step a) a filling composition which is based on a second curing polymer resin supplemented with at least one mineral filler,
wherein the core of the article has a thickness of at least 10 mm, the filling composition contains only one single initiator in a concentration of 0.5%wt to 5.0%wt of initiator relative to the amount of curing polymer resin in the filling composition,
**characterized in that** the filling composition for the core contains at least 11%wt and at most 20%wt of curing polymer resin, relative to the dry amount of filling composition.

2. The process according to claim 1 wherein the core of the article has a thickness of at least 15 mm, preferably at least 20 mm, more preferably at least 25 mm, even more preferably at least 30 mm.

3. The process according to any one of the preceding claims wherein the second curing polymer belongs to the family of unsaturated polyester polymer resins, and wherein preferably for the curing reaction a vinyl monomer has been incorporated, more preferably styrene.

4. The process according to the preceding claim wherein the one single initiator in the filling composition is an organic peroxide, more preferably methyl ethyl ketone peroxide (MEKP).

5. The process according to any one of the preceding claims comprising step a) wherein the first and the second curing polymer resins belong to the same chemical family of curable polymeric resins.

6. The process according to any one of the preceding claims comprising step a) wherein the gel coat layer in the coated mould of step a) is only cured partially before the coated mould of step a) is subjected to step b).

7. The process according the preceding claim wherein the curing polymer resin of step a) is cured only until the gel coat layer is at most touch dry, before the coated mould of step a) is subjected to step b).

8. The process according to any one of the preceding claims comprising step a) wherein the first curing polymer resin belongs to the family of unsaturated polyester polymer resins, and wherein preferably for the curing reaction a vinyl monomer has been incorporated, more preferably styrene.

9. The process according to any one of the preceding claims comprising step a) wherein the gel coat layer in step a) comprises at least one initiator, preferably only one initiator, preferably an organic peroxide, more preferably methyl ethyl ketone peroxide.

10. The process according to any one of the preceding claims wherein the mineral filler in step b) is selected from the list consisting of quartz, preferably quartz grains, more preferably quartz grains having an average particle size in the range of 1 to 3 mm, more preferably dried quartz grains, sand, preferably sand which has been dried and sieved, dolomite powder, and mixtures or combinations thereof.

11. The process according to any one of the preceding claims wherein the mineral filler in step b) comprises a mixture of a first filler with grains which have an average diameter in the range of 0.5-5 mm, with a second filler with fine grains having an average diameter in the range of 50-500 µm.

12. The process according to any one of the preceding claims wherein the mould before step b), or before step a) if the process comprises step a), is treated with a release agent.

13. The process according to any one of the preceding claims comprising step a) wherein the gel coat layer further contains a substance which is selected from a dye, a pigment, a filler, paint flakes, metal flakes, and combinations thereof.

14. The process according to any one of the preceding claims wherein the filling composition for step b) is obtained by first dry blending of the mineral filler material, if present with other dry ingredients of the filling composition, followed by the injection of the curing polymer resin, preferably as a mixture which possibly shortly before the injection was mixed with the initiator and/or with at least one and preferably all of the other liquid ingredients of the filling composition, and subsequently mixing of the liquid and the solid ingredients of the filling composition, preferably by means of a worm wheel or an Archimedes screw which brings the filling composition while mixing at or above the coated mould.

15. The process according to any one of the preceding claims wherein as part of step b) after the introduction of the filling composition into the core of the coated mould the mould is vibrated, possibly in more than one period, with each time an interval, between which the mould may be transferred to another location, and wherein preferably the vibration occurs at a frequency of a number of cycles per minute which is in the range of 10 to 600 cycles per minute, and preferably for a total vibration time which is in the range of 15 seconds to 2 minutes.

## Patentansprüche

1. Ein Verfahren zur Herstellung eines Artikels zur Verkleidung von Böden oder Wänden, welches folgende Schritte in einer Form umfasst:
a) optional Auftragen einer Gelbeschichtung, basierend auf einem ersten aushärtenden Polymerharz, auf die Innenseite der Form, um eine beschichtetes Form zu erhalten,
b) Einbringen in den Kern der Form oder in den Kern der beschichteten Form aus Schritt a) einer Füllmasse, welche auf einem zweiten aushärtenden Polymerharz basiert, ergänzt mit zumindest einem mineralischen Füllstoff,
wobei der Kern des Artikels eine Dicke von mindestens 10 mm hat, die Füllmasse nur einen einzigen Initiator in einer Konzentration von 0,5 Gew.-% bis 5,0 Gew.% des Initiators in Bezug zur Menge des aushärtenden Polymerharzes in der Füllmasse enthält,
**dadurch gekennzeichnet, dass** die Füllmasse für den Kern mindestens 11 Gew.-% und höchstens 20 Gew.-% von aushärtendem Polymerharz, in Bezug zur Trockenmenge an Füllmasse, enthält.

2. Das Verfahren nach Anspruch 1, wobei der Kern des Artikels eine Dicke von mindestens 15 mm, bevorzugt mindestens 20 mm, noch besser mindestens 25 mm, sogar noch besser mindestens 30 mm hat.

3. Das Verfahren nach irgendeinem der vorigen Ansprüche, wobei das zweite aushärtende Polymer zur Familie von ungesättigten Polyester-Polymerharzen gehört, und wobei bevorzugt für die Aushärtungsreaktion ein Vinylmonomer integriert wurde, noch besser Styrol.

4. Das Verfahren nach dem vorigen Anspruch, wobei der eine einzige Initiator in der Füllmasse ein organisches Peroxid ist, noch besser Methylethylketonperoxid (MEKP).

5. Das Verfahren nach irgendeinem der vorigen Ansprüche, welches Schritt a) umfasst, wobei das erste und das zweite aushärtende Polymerharz zur selben chemischen Familie von aushärtbaren Polymerharzen gehören.

6. Das Verfahren nach irgendeinem der vorigen Ansprüche, welches Schritt a) umfasst, wobei die Gelbeschichtung im der beschichteten Form aus Schritt a) nur teilweise ausgehärtet ist, bevor die beschichtete Form aus Schritt a) Schritt b) unterzogen wird.

7. Das Verfahren nach dem vorigen Anspruch, wobei das aushärtende Polymerharz aus Schritt a) nur ausgehärtet wird, bis die Gelbeschichtung höchstens staubtrocken ist, bevor die beschichtete Form aus Schritt a) Schritt b) unterzogen wird.

8. Das Verfahren nach irgendeinem der vorigen Ansprüche, welches Schritt a) umfasst, wobei das erste aushärtende Polymerharz zur Familie von ungesättigten Polyester-Polymerharzen gehört, und wobei bevorzugt für die Aushärtungsreaktion ein Vinylmonomer integriert wurde, noch besser Styrol.

9. Das Verfahren nach irgendeinem der vorigen Ansprüche, welches Schritt a) umfasst, wobei die Gelbeschichtung in Schritt a) zumindest einen Initiator umfasst, bevorzugt nur einen Initiator, bevorzugt ein organisches Peroxid, noch besser Methylethylketonperoxid.

10. Das Verfahren nach irgendeinem der vorigen Ansprüche, wobei der mineralische Füllstoff in Schritt b) ausgewählt ist aus der Liste bestehend aus Quarz, bevorzugt Quarzkörner, noch besser Quarzkörner mit einer durchschnittlichen Korngröße im Bereich von 1 bis 3 mm, noch besser getrocknete Quarzkörner, Sand, bevorzugt Sand, der getrocknet und gesiebt wurde, Dolomitpulver, und Mischungen oder Kombinationen davon.

11. Das Verfahren nach irgendeinem der vorigen Ansprüche, wobei der mineralische Füllstoff in Schritt b) eine Mischung aus einem ersten Füllstoff mit Körnern, die einen durchschnittlichen Durchmesser im Bereich von 0,5-5 mm haben, mit einem zweiten Füllstoff mit feinen Körnern mit einem durchschnittlichen Durchmesser im Bereich von 50-500 µm umfasst.

12. Das Verfahren nach irgendeinem der vorigen Ansprüche, wobei die Form vor Schritt b), oder vor Schritt a), wenn das Verfahren Schritt a) umfasst, mit einem Formentrennmittel behandelt wird.

13. Das Verfahren nach irgendeinem der vorigen Ansprüche, welches Schritt a) umfasst, wobei die Gelbeschichtung ferner eine Substanz enthält, die ausgewählt ist aus einem Farbstoff, einem Pigment, einem Füllstoff, Lackflocken, Metallflocken, und Kombinationen davon.

14. Das Verfahren nach irgendeinem der vorigen Ansprüche, wobei die Füllmasse für Schritt b) erhalten wird, indem zuerst der mineralische Füllstoff, falls vorhanden, mit anderen trockenen Bestandteilen der Füllmasse trocken gemischt wird, gefolgt von der Einspritzung des aushärtenden Polymerharzes, bevorzugt als eine Mischung, die möglicherweise kurz vor der Einspritzung mit dem Initiator und/oder mit zumindest einem und bevorzugt allen anderen flüssigen Bestandteilen der Füllmasse vermischt wurde, und danach Vermischen der flüssigen und der festen Bestandteile der Füllmasse, bevorzugt mittels eines Schneckenrades oder einer Archimedischen Schraube, die die Füllmasse während des Mischens zu dem oder über die beschichtete Form bringt.

15. Das Verfahren nach irgendeinem der vorigen Ansprüche, wobei die Form als Teil von Schritt b) nach dem Einbringen der Füllmasse in den Kern der beschichteten Form gerüttelt wird, möglicherweise in mehr als einer Periode, mit jeweils einem Intervall, zwischen dem die Form an einen anderen Ort verbracht werden kann, und wobei das Rütteln bevorzugt bei einer Frequenz einer Anzahl von Zyklen pro Minute erfolgt, die im Bereich von 10 bis 600 Zyklen pro Minute liegt, und bevorzugt für eine komplette Rüttelzeit, die im Bereich von 15 Sekunden bis 2 Minuten liegt.

## Revendications

1. Procédé pour la production d'un article pour le revêtement de sols ou de murs, comprenant les étapes, dans un moule :
a) d'application optionnelle d'une couche de gel de revêtement, à base d'une première résine de polymère durcissable, sur l'intérieur du moule afin d'obtenir un moule revêtu,
b) d'introduction dans le coeur du moule ou dans le coeur du moule revêtu à l'étape a), une composition de remplissage qui est à base d'une seconde résine de polymère durcissable supplémentée avec au moins une charge minérale,
dans lequel le coeur de l'article a une épaisseur d'au moins 10 mm, la composition de remplissage contient une concentration de 0,5 % en poids à 5,0 % en poids d'initiateur par rapport à la quantité de résine de polymère durcissable dans la composition de remplissage,
**caractérisé en ce que** la composition de remplissage pour le coeur contient au moins 11 % en poids et au plus 20 % en poids de résine de polymère durcissable, par rapport à la quantité sèche de composition de remplissage, et la composition de remplissage contient seulement un seul initiateur.

2. Procédé selon la revendication 1, dans lequel le coeur de l'article a une épaisseur d'au moins 15 mm, de préférence au moins 20 mm, plus préférentiellement au moins 25 mm, plus préférentiellement encore au moins 30 mm.

3. Procédé selon l'une quelconque des revendications précédentes, dans lequel le second polymère durcissable appartient à la famille des résines de polymère de polyester insaturé, et dans lequel de préférence pour la réaction de durcissement, un monomère de vinyle a été incorporé, plus préférentiellement du styrène.

4. Procédé selon la revendication précédente, dans lequel le seul initiateur dans la composition de remplissage est un peroxyde organique, plus préférentiellement un peroxyde de méthyléthylcétone (MEKP).

5. Procédé selon l'une quelconque des revendications précédentes, comprenant l'étape a), dans lequel les première et seconde résines de polymère durcissable appartiennent à la même famille chimique de résines de polymère durcissables.

6. Procédé selon l'une quelconque des revendications précédentes, comprenant l'étape a), dans lequel la couche de gel de revêtement dans le moule revêtu de l'étape a) est seulement durcie partiellement avant que le moule revêtu de l'étape a) ne soit soumis à l'étape b).

7. Procédé selon la revendication précédente, dans lequel la résine de polymère durcissable de l'étape a) est durcie seulement jusqu'à ce que la couche de gel de revêtement soit au maximum sèche au toucher, avant que le moule revêtu de l'étape a) ne soit soumis à l'étape b).

8. Procédé selon l'une quelconque des revendications précédentes, comprenant l'étape a), dans lequel la première résine de polymère durcissable appartient à la famille des résines de polymère de polyester insaturé, et dans lequel de préférence pour la réaction de durcissement, un monomère de vinyle a été incorporé, plus préférentiellement du styrène.

9. Procédé selon l'une quelconque des revendications précédentes, comprenant l'étape a), dans lequel la couche de gel de revêtement dans l'étape a) comprend au moins un initiateur, de préférence un seul initiateur, de préférence un peroxyde organique, plus préférentiellement un peroxyde de méthyléthylcétone.

10. Procédé selon l'une quelconque des revendications précédentes, dans lequel la charge minérale dans l'étape b) est sélectionnée à partir de la liste consistant en du quartz, de préférence des grains de quartz, plus préférentiellement des grains de quartz présentant une taille de particule moyenne dans la plage de 1 à 3 mm, plus préférentiellement des grains de quartz séchés, du sable, de préférence du sable qui a été séché et tamisé, de la poudre de dolomite, et des mélanges ou des combinaisons de ceux-ci.

11. Procédé selon l'une quelconque des revendications précédentes, dans lequel la charge minérale dans l'étape b) comprend un mélange d'une première charge avec des grains qui présentent un diamètre moyen dans la plage de 0,5 à 5 mm, avec une seconde charge avec des grains fins ayant un diamètre moyen dans la plage de 50 à 500 µm.

12. Procédé selon l'une quelconque des revendications précédentes, dans lequel le moule avant l'étape b) ou avant l'étape a) si le procédé comprend l'étape a), est traité avec un agent de démoulage.

13. Procédé selon l'une quelconque des revendications précédentes, comprenant l'étape a), dans lequel la couche de gel de revêtement contient en outre une substance qui est sélectionnée à partir d'un colorant, un pigment, une charge, des flocons de peinture, des flocons métalliques, et des combinaisons de ceux-ci.

14. Procédé selon l'une quelconque des revendications précédentes, dans lequel la composition de remplissage pour l'étape b) est obtenue par un premier mélange à sec du matériau de charge minérale, s'il est présent avec d'autres ingrédients secs de la composition de remplissage, suivi par l'injection de la résine de polymère durcissable, de préférence comme un mélange qui a été éventuellement mélangé brièvement avant l'injection avec l'initiateur et/ou avec au moins un et de préférence tous les autres ingrédients liquides de la composition de remplissage, et le mélange ultérieur du liquide et des ingrédients solides de la composition de remplissage, de préférence à l'aide d'une roue hélicoïdale ou d'une vis d'Archimède qui amène la composition de remplissage lors du mélange au niveau ou au-dessus du moule revêtu.

15. Procédé selon l'une quelconque des revendications précédentes, dans lequel comme partie de l'étape b) après l'introduction de la composition de remplissage dans le coeur du moule revêtu, le moule est mis en vibration, éventuellement dans plus d'une période, avec chaque fois un intervalle, entre lequel le moule peut être transféré à un autre endroit, et dans lequel de préférence la vibration apparaît à une fréquence d'un nombre de cycles par minute qui est dans la plage de 10 à 600 cycles par minute, et de préférence pendant un temps de vibration total qui est compris dans la plage de 15 secondes à 2 minutes.
